(19) Europäisches Patentamt

European Patent Office

Office européen des brevets

(11) Veröffentlichungsnummer: **0 343 391**
**A2**

# (12) EUROPÄISCHE PATENTANMELDUNG

(21) Anmeldenummer: 89107537.6

(22) Anmeldetag: 26.04.89

(51) Int. Cl.⁴: **B60G 17/04**

(30) Priorität: 24.05.88 DE 3817508

(43) Veröffentlichungstag der Anmeldung:
29.11.89 Patentblatt 89/48

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Schneider, Steffen**
**Brächterstrasse 62**
**D-7146 Tamm-Hohenstange(DE)**
Erfinder: **Marquardt, Werner Karl, Dipl.-Ing.**
**Primelweg 30**
**D-7145 Markgröningen(DE)**
Erfinder: **Weisser, Roland, Dipl.-Ing. (FH)**
**Solitudestrase 13**
**D-7257 Ditzingen(DE)**

(54) **Schaltventil für ein Fahrzeug-Federelement.**

(57) Bei einem Fahrzeug-Federelement mit einem zu- und abschaltbaren Zusatzvolumen müssen einerseits große Volumenströme zwischen dem Federelement und dem Zusatzvolumen durch eine Verbindung austauschbar sein, andererseits soll die Verbindung mit minimaler Hilfsenergie öffen- und schließbar sein.

Zum Öffnen und Schließen der Verbindung dient ein Schaltventil (5) mit einer Vorsteuereinrichtung (67). Je nach Schaltstellung der Vorsteuereinrichtung (67) und mit Hilfe mindestens einer beweglichen Trennwand (35) können zwei Schließkörper (29, 30) den Weg für das Druckmedium durch das Schaltventil (5) entweder freigeben oder verschließen. Die Betätigung der Vorsteuereinrichtung (67) erfolgt mit minimaler Hilfsenergie.

Mit Zu- und Abschalten des Zusatzvolumens zu dem Federelement kann die Federrate (Federkonstante) des Federelementes verändert werden. Das Federelement ist bestimmt zur Federung zwischen einer Achse und einem Aufbau eines Kraftfahrzeuges.

FIG. 1

## Schaltventil für ein Fahrzeug-Federelement

Stand der Technik

Die Erfindung geht aus von einem Schaltventil für ein Fahrzeug-Federelement nach der Gattung des Hauptanspruchs. Es ist schon ein Fahrzeug-Federelement bekannt, bei dem zum Verstellen der Federcharakteristik zu dem Volumen des Federelementes ein Zusatzvolumen zu- und abgeschaltet werden kann. Damit größere Volumenströme zwischen dem Volumen des Federelementes und dem Zusatzvolumen fließen können, müssen relativ große Durchflußquerschnitte gewählt werden, und dies erfordert eine relativ große Betätigungseinrichtung.

Vorteile der Erfindung

Das erfindungsgemäße Schaltventil mit den kennzeichnenden Merkmalen des Hauptanspruches hat demgegenüber den Vorteil, daß durch Anordnung einer Vorsteuereinrichtung das Druckmedium so zur Wirkung gebracht werden kann, daß die in den Kanälen befindlichen Schließkörper die Verbindung zwischen dem Volumen des Federelementes und des Zusatzvolumens freigeben oder absperren.

Durch die in den Unteransprüchen aufgeführten Maßnahmen sind vorteilhafte Weiterbildungen und Verbesserungen des im Hauptanspruch angegebenen Schaltventils möglich.

Besonders vorteilhaft ist, daß, wenn das Volumen des Federelementes mit dem Zusatzvolumen verbunden sein soll, ein relativ großer Durchflußquerschnitt zur Verfügung steht. Durch die Verwendung einer oder mehrerer beweglicher Trennwände und einer Vorsteuereinrichtung, mit der eine kleine Teilmenge des durchströmenden Druckmediums auf die Trennwand/Trennwände zu lenken ist, kann diese ihrerseits wiederum mittelbar oder unmittelbar den Schließkörper im Sinne einer Ventilschließung beeinflussen. Dadurch ist es möglich mit einer relativ kleinen Vorsteuereinrichtung ein relativ großes Volumen zu steuern. Zur Betätigung der Vorsteuereinrichtung sind nur geringe Kräfte notwendig. Dadurch ist es möglich, die Vorsteuereinrichtung mit z.B. einem relativ kleinen Magneten zu betätigen.

Zeichnung

In der Zeichnung sind mehrere erfindungsgemäße Ausführungsbeispiele dargestellt und in der nachfolgenden Beschreibung näher erläutert.

Beschreibung der Ausführungsbeispiele

Aufbau und Wirkungsweise eines erfindungsgemäßen Schaltventils für ein Fahrzeug-Federelement soll anhand von vier Ausführungsbeispielen näher erläutert werden. Die Figuren 1 und 2 zeigen ein erstes Ausführungsbeispiel und die Figuren 3 bis 5 zeigen drei weitere Beispiele. In allen Figuren sind gleiche oder gleichwirkende Teile mit den gleichen Bezugszeichen versehen.

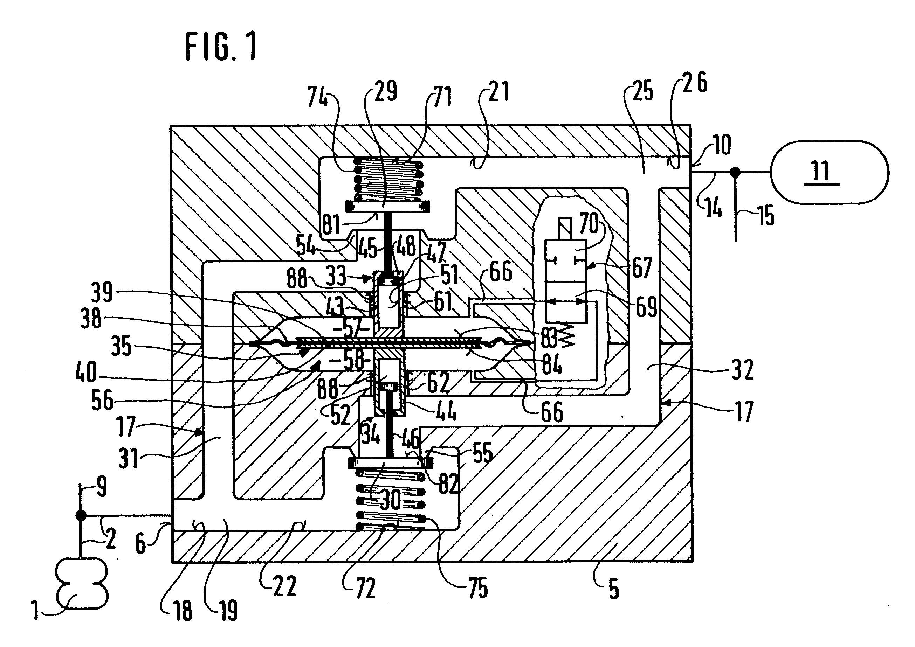

In Figur 1, dem ersten Ausführungsbeispiel, ist ein Fahrzeug-Federelement mit dem Bezugszeichen 1 versehen. Das Federelement 1 ist über eine Leitung 2 mit dem Schaltventil 5 verbunden. Die Leitung 2 ist an einem ersten Leitungsanschluß 6 an das Schaltventil 5 angeschlossen. Über eine oder mehrere Abzweigungen 9 in der Leitung 2 können weitere Bauteile, z.B. weitere Federelemente an dem Schalt ventil 5 angeschlossen sein. An dem Schaltventil 5 befindet sich ein weiterer Leitungsanschluß 10, wo ein Zusatzvolumen 11 über eine Leitung 14 mit dem Schaltventil 5 verbunden ist. An einer oder an mehreren Abzweigungen 15 in der Leitung 14 können weitere Bauteile, z.B. weitere Zusatzvolumina angeschlossen sein. Die Abzweigungen 9 und 15 können aber auch, wie nicht dargestellt, direkt in das Schaltventil 5 integriert sein.

Zwischen den beiden Leitungsanschlüsse 6 und 10 besteht innerhalb des Schaltventils 5 eine Verbindung 17. Von dem ersten Leitungsanschluß 6 führt zunächst ein Kanalstück 18 zu einer Abzweigung 19. Dort verzweigt sich die Verbindung 17 in einen ersten Kanal 21 und einen zweiten Kanal 22, bis sie sich in einer Abzweigung 25 wieder vereinigt, um sich dann in dem Kanalstück 26 bis zu dem zweiten Leitungsanschluß 10 fortzusetzen. In dem ersten Kanal 21 ist ein erster Schließkörper 29 und in dem zweiten Kanal 22 ist ein zweiter Schließkörper 30 angeordnet. Die Verbindung 17 wird durch die beiden Schließkörper 29 und 30 in einen ersten Druckbereich 31 und in einen zweiten Druckbereich 32 unterteilt. Der erste Druckbereich 31 erstreckt sich als Hohlraum zwischen dem ersten Leitungsanschluß 6, dem ersten Schließkörper 29 und dem zweiten Schließkörper 30. Der zweite Druckbereich 32, ebenfalls ein Hohlraum, wird begrenzt durch die Schließkörper 29 und 30 und durch den zweiten Leitungsanschluß 10. Der erste Schließkörper 29 ist über eine erste halb-lose Kupplung 33 und der zweite Schließkörper 30 ist über eine zweite halb-lose Kupplung 34 mit einer beweglichen Trennwand 35 verbunden. Die bewegliche Trennwand 35 ist in dem Ausführungsbeispiel nach Figur 1 in Form einer durch zwei Platten 39 und 40 versteiften Membrane 38 ausgebildet.

Die beiden halb-losen Kupplungen 33 und 34 bestehen im wesentlichen aus je zwei Teilen, einem Klammerteil 43 und 44 und einem Stiftteil 45 und 46. Das Stiftteil 45 ist gegenüber dem Klammerteil 43 und das Stiftteil 46 bezüglich dem Klammerteil 44 in beschränktem Maße frei beweglich. An dem Stiftteil 45 befindet sich ein Stiftkopf 47 und an dem Klammerteil 43 befindet sich ein Absatz 48. Durch den Stiftkopf 47, der an dem Absatz 48 zur Anlage kommen kann, wird der maximale Abstand des Schließkörpers 29 gegenüber der beweglichen Trennwand 35 begrenzt. Einerseits kann das Stiftteil 45 mit dem Stiftkopf 47 in einen Hohlraum 51 des Klammerteils 43 eintauchen, so daß der Schließkörper 29 an einem gehäusefesten Ventilsitz 54 im Kanal 21 zur Anlage kommen kann, unabhängig von der Stellung der beweglichen Trennwand 35. Andererseits ist die Länge des Stiftteiles 45 und des Hohlraumes 51 so bemessen, daß der Schließkörper 29, je nach Stellung der beweglichen Trennwand 35, von dem gehäusefesten Ventilsitz 54 mehr oder weniger weit abheben kann. Desweiteren ist die Länge des Stiftteiles 45 und des Hohlraumes 51 aber auch so kurz, daß, je nach Stellung der beweglichen Trennwand 35, diese den Schließkörper 29 gegen den Ventilsitz 54 ziehen kann. Die zweite Kupplung 34 mit dem Schließkörper 30 und einem Hohlraum 52 in dem Klammerteil 44 ist in der gleichen Weise ausgeführt wie die erste Kupplung 33 mit dem Schließkörper 29. Der zweite Schließkörper 30 kann entsprechend an einem gehäusefesten Ventilsitz 55 zur Anlage gebracht werden.

Die bewegliche Trennwand 35 trennt einen Raum 56 in eine erste Kammer 57 und in eine zweite Kammer 58. Die erste Kammer 57 ist über einen ersten Durchlaß 61 mit dem ersten Druckbereich 31 verbunden. Ebenso ist es mit der Kammer 58, die über einen zweiten Durchlaß 62 mit dem zweiten Druckbereich 32 verbunden ist. Die Durchlässe 61 und 62 können so eng ausgebildet sein, daß das durchfließende Druckmedium mehr oder weniger angedrosselt wird. Die erste Kammer 57 ist mit der zweiten Kammer 58 über eine Leitung 66 verbunden. In der Leitung 66 befindet sich eine Vorsteuereinrichtung 67. Mit der Vorsteuereinrichtung 67 kann die Leitung 66 geschlossen und geöffnet werden. Je nach Ausführung der Vorsteuereinrichtung 67 sind auch Zwischenstellungen zwischen offen und geschlossen möglich. Die Vorsteuereinrichtung 67 wurde in der Figur 1 als 2/2-Wegeventil symbolisch dargestellt. Das Symbol für das Wegeventil zeigt zwei Schaltstellungen, eine erste Schaltstellung 69 und eine zweite Schaltstellung 70. Befindet sich die Vorsteuereinrichtung 67, wie in der in Figur 1 symbolisch dargestellt, in der ersten Schaltstellung 69, dann ist die erste Kammer 57 mit der zweiten Kammer 58 verbunden und es besteht Druckausgleich zwischen diesen beiden Kammern. Durch das Druckmedium entsteht kein Druck auf die bewegliche Trennwand und diese kann sich mehr oder weniger frei innerhalb des Raumes 56 bewegen. In der Kammer 57 und/oder in der Kammer 58 können sich eine oder mehrere Federn befinden. Dies führt zu einer eventuell notwendigen Zentrierung der beweglichen Trennwand 35.

Zwischen dem ersten Schließkörper 29 und einer ersten Anlage 71 im ersten Kanal 21 befindet sich eine erste Feder 74, und zwischen dem zweiten Schließkörper 30 und einer zweiten Anlage 72 im zweiten Kanal 22 befindet sich eine zweite Feder 75. Die beiden Federn 74 und 75 sind so angeordnet, daß auf beide Schließkörper 29 und 30 je eine Federkraft in Schließrichtung wirken kann.

In dem in der Figur 1 dargestellten Ausführungsbeispiel befindet sich die Vorsteuereinrichtung 67 in der Schaltstellung 69, bei der sich das Druckmedium zwischen der ersten Kammer 57 und der zweiten Kammer 58 ausgleichen kann. Befindet sich die Vorsteuereinrichtung 67 in dieser Schaltstellung, dann kann die bewegliche Trennwand 35 keine Kraft über die Kupplungen 33 und 34 auf die Schließkörper 29 und 30 ausüben. Die Schließkörper 29 und 30 können, je nachdem auf welcher Seite der Schließkörper der größerere Druck herrscht, durch das Druckmedium geschlossen und geöffnet werden. Ist der Druck in dem Federelement 1 höher als der Druck in dem Zusatzvolumen 11, z.B. beim Einfedern des Federelementes 1, dann strömt das Druckmedium aus dem Federelement 1 durch die Leitung 2 über den Leitungsanschluß 6 in das Schaltventil 5. Dies führt in dem ersten Druckbereich 31 zu einer Druckerhöhung und bewirkt, daß der Schließkörper 30 in dem Kanal 22 gegen den Ventilsitz 55 gedrückt wird. Unterstützt wird die Schließbewegung des Schließkörpers 30 durch die Feder 75. Dies führt dazu, daß durch den Kanal 22 das Druckmedium nicht hindurchfließen kann. Die Druckerhöhung in dem ersten Druckbereich 31 bewirkt aber auch, daß der Schließkörper 29 entgegen der von der Feder 74 ausgeübten Federkraft von dem Ventilsitz 54 abhebt. Somit kann das Druckmedium von dem Federelement 1 über den ersten Leitungsanschluß 6, durch den ersten Kanal 21, über den zweiten Leitungsanschluß 10 zu dem Zusatzvolumen 11 strömen. Dies führt zu einer Druckerhöhung in dem Zusatzvolumen 11. Im umgekehrten Falle, bei einer Absenkung des Druckes in dem Federelement 1, z.B. beim Ausfedern des Federelementes, ist der Druck im zweiten Druckbereich 32 höher als in dem ersten Druckbereich 31. Dies bewirkt, daß der Schließkörper 29 gegen den Ventilsitz 54 gedrückt wird, und daß der Schließkörper 30 von dem Ventilsitz 55 abhebt und das Druckmedium von dem Zusatzvolumen 11 über den zweiten Leitungsanschluß 10 durch den Kanal 22 zu dem Federelement 1 strömen kann. Strömt das Druckmedium von dem Federelement 1 durch den Kanal 21 zu dem Zusatzvolumen 11, dann muß das Druckmedium den Schließkörper 29 gegen die Feder 74 drücken. Dies führt zu einem Druckabfall in dem Kanal 21, der sich berechnet aus einer Wirkfläche 81 des Schließkörpers 29 und der Kraft der Feder 74. In umgekehrter Richtung, wenn das Druckmedium von dem Zusatzvolumen 11 zu dem Federelement 1 strömt, dann verhält es sich entsprechend. Das Druckmedium muß in dem Kanal 22 den Schließkörper 30 entgegen der Federkraft der Feder 75 öffnen. Dies ergibt einen Druckabfall in dem Kanal 22, der sich aus einer Wirkfläche 82 des Schließkörpers 30 und der Federkraft der Feder 75 berechnet. Weil beiderseits der beweglichen Trennwand 35 nahezu der gleiche Druck herrscht, wird das Abheben des Schließkörpers 29 von dem Ventilsitz 54 bzw. des Schließkörpers 30 von dem Ventilsitz 55 durch die bewegliche Trennwand 35 nicht verhindert. Da der Schließkörper 29, die erste Kupplung 33, die bewegliche Trennwand 35, die zweite Kupplung 34 und der zweite Schließkörper 30 eine Einheit bilden, muß die Länge des Stiftteiles 45, des Stiftteils 46, des Hohlraumes 51 und des Hohlraumes 52 so bemessen sein, daß, wenn der Schließkörper 30 an dem Ventilsitz 55 zur Anlage kommt, daß dann der Schließkörper 29 ausreichend weit von dem Ventilsitz 54 abheben kann; ebenso muß bei Anlage des Schließkörpers 29 an dem Ventilsitz 54 der Schließkörper 30 von dem Ventilsitz 55 ausreichend weit abheben können.

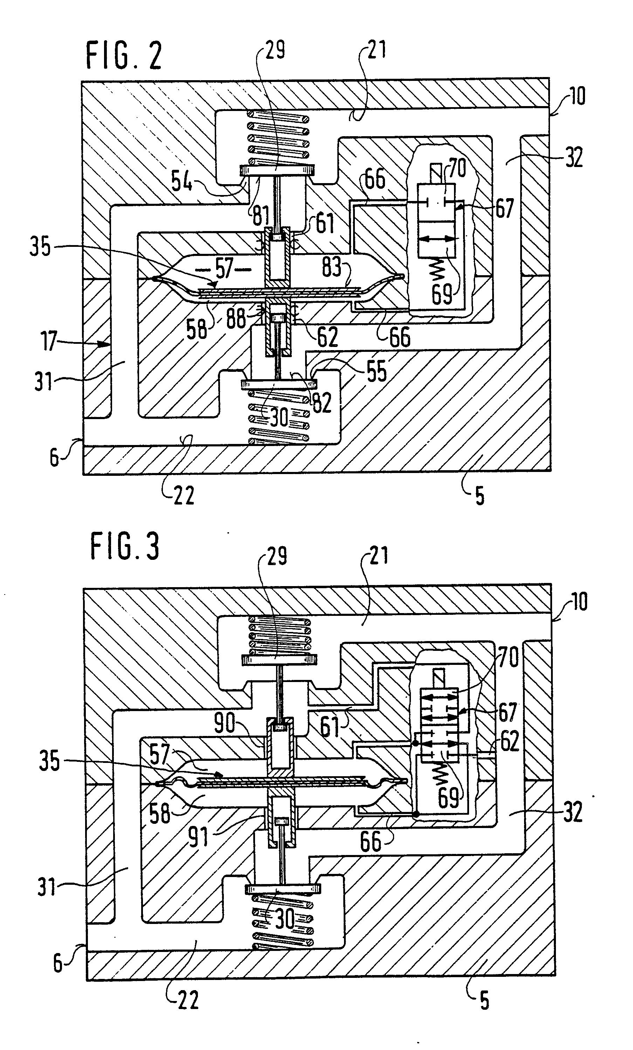

Die Figur 2 zeigt das gleiche Ausführungsbeispiel wie die Figur 1. Der Einfachheit halber wurden das Federelement 1, das Zusatzvolumen 11 und die Zuleitungen weggelassen. Im Gegensatz zu der Figur 1 befindet sich in der Figur 2 die Vorsteuereinrichtung 67 in der symbolisch dargestellten zweiten Schaltstellung 70, bei der ein Druckausgleich zwischen der Kammer 57 und der Kammer 58 nicht möglich ist. Ist der Druck im ersten Druckbereich 31 höher als der Druck im zweiten Druckbereich 32, dann wird der zweite Schließkörper 30 gegen den Ventilsitz 55 gedrückt, wie es oben beschrieben wurde. Die erste Kammer 57 hat über den Durchlaß 61 Verbindung zum Druck im ersten Druckbereich 31. Die zweite Kammer 58 hat über den Durchlaß 62 Verbindung zu dem Druck im zweiten Druckbereich 32. Ist nun der Druck am Leitungsanschluß 6 höher als am zweiten Leitunganschluß 10, dann ist auch der Druck in der Kammer 57 höher als in Kammer 58, da zwischen diesen beiden Kammern 57 und 58 wegen der Schaltstellung 70 der Vorsteuereinrichtung 67 kein Druckausgleich stattfinden kann. Der höhere Druck in der Kammer 57 gegenüber dem Druck in der Kammer 58 führt zu einer Auslenkung der beweglichen Trennwand 35 in eine den ersten Kanal 21 schließenden Richtung. Die Druckdifferenz zwischen den Druckbereichen 31 und 32 drückt auf die Wirkfläche 81 des Schließkörpers 29 und versucht den Kanal 21 zu öffnen. Dieselbe Druckdifferenz wirkt aber auch auf eine Wirkfläche 83 der beweglichen Trennwand 35. Die beiden Kräfte auf die Wirkfläche 81 und auf die Wirkfläche 83 sind entgegengerichtet. Da die Wirkfläche 83 der beweglichen Trennwand 35 größer ist als die Wirkfläche 81 des Schließkörpers 29, wird der Schließkörper 29 gegen den Ventilsitz 54 gedrückt. Dadurch kann das Druckmedium weder durch den ersten Kanal 21 noch durch den zweiten Kanal 22 von dem Leitungsanschluß 6 zum Leitungsanschluß 10 fließen. Ist der Druck am Leitungsanschluß 10 höher als am Leitungsanschluß 6, dann ist auch in der zweiten Kammer 58 der Druck höher als in der ersten Kammer 57 und der Schließkörper 30 wird in gleicher Weise, wie oben für den Schließkörper 29 beschrieben, gegen den Ventilsitz 55 gedrückt. Dadurch ist weder ein Durchfluß des Druckmediums von dem Leitungsanschluß 6 zum Leitungsanschluß 10 noch in umgekehrter Richtung vom Leitungsanschluß 10 zum Leitungsanschluß 6 möglich. Befindet sich die Vorsteuereinrichtung 67, wie in der Figur 2 dargestellt, in der zweiten Stellung 70, dann ist die Verbindung 17 zwischen dem an dem Schaltventil 5 angeschlossenen Federelement 1 und dem angeschlossenen Zusatzvolumen 11 verschlossen.

In dem in den Figuren 1 und 2 dargestellten Ausführungsbeispiel wird durch die Durchlässe 61 und 62 auch noch die erste und die zweite Kupplung 33 und 34 hindurchgeführt. Dies ist nicht unbedingt notwendig, sondern es kann auch zur Hindurchführung der Kupplungen ein enges Spiel vorgesehen werden und die Durchlässe 61 und 62 können separate Bohrungen sein.

Auch wenn die Querschnitte der Kanäle 21 und 22 relativ groß sind und zwischen den Leitungsanschlüssen 6 und 10 ein relativ großes Volumen ausgetauscht werden kann, dann ist trotzdem eine nur relativ kleine Vorsteuereinrichtung 67 mit relativ kleinen Durchflußquerschnitten und relativ kleinen Betätigungskräften erforderlich, denn durch die Vorsteuereinrichtung 67 fließt nur eine relativ kleine Teilmenge eines Volumens, die erforderlich ist, um Druckausgleich zwischen den Kammern 57 und 58 herstellen zu können. Damit die Teilmenge, die durch die Vorsteuereinrichtung 67 fließt, nicht zu groß ist, ist es erforderlich, die Querschnitte der Durchlässe 61 und 62 nicht zu groß auszuführen. Gegebenenfalls ist es günstig, in einen der Durchlässe 61, 62 oder in beide Durchlässe je eine Drossel 88 einzubauen.

In der Figur 3 ist, als zweites Ausführungsbeispiel im wesentlichen das gleiche Schaltventil 5 dargestellt wie in den Figuren 1 und 2. In der Figur 3 sind jedoch auch die Durchlässe 61 und 62 durch die Vorsteuereinrichtung 67 absperrbar und öffenbar. Dazu ist die Vorsteuereinrichtung 67 gegenüber der in dem ersten Ausführungsbeispiel beschriebenen Vorsteuereinrichtung 67 etwas abgewandelt und die Durchlässe 61 und 62 sind durch die Vorsteuereinrichtung 67 geführt. In der ersten Schaltstellung 69 der Vorsteuereinrichtung 67 hat die erste Kammer 57 über die Vorsteuereinrichtung 67 und die Leitung 66 Verbindung mit der zweiten Kammer 58. Auch hier ist in der zweiten Schaltstellung 70 der Vorsteuereinrichtung 67 die erste Kammer 57 von der zweiten Kammer 58 abgetrennt. In der zweiten Schaltstellung 70 der Vorsteuereinrichtung 67 hat der erste Druckbereich 31 über den durch die Vorsteuereinrichtung 67 geführten Durchlaß 61 Verbindung zu der ersten Kammer 57 und der zweite Druckbereich 32 hat über den durch die Vorsteuereinrichtung 67 geführten Durchlaß 62 Verbindung zu der zweiten Kammer 58. In der ersten Schaltstellung 69 der Vorsteuereinrichtung 67 hingegen sind die Durchlässe 61 und 62 zwischen dem ersten Druckbereich 31 und der ersten Kammer 57 und zwischen dem zweiten Druckbereich 32 und der zweiten Kammer 58 abgesperrt. Dadurch ist es möglich, auch bei kleinem Querschnitt der Leitung 66 und bei kleiner Vorsteuereinrichtung 67 für einwandfreien Druckausgleich zwischen den Kammern 57 und 58 zu sorgen. Um die bewegliche Trennwand 35 mit den Schließkörpern 29 und 30 verbinden zu können, sind Wanddurchführungen 90 und 91 vorgesehen. Diese Wanddurchführungen können relativ eng bemessen werden und es fließt nur eine unbedeutende, für die Funktion des Schaltventiles 5 unwesentliche Teilmenge des Druckmediums durch diese Wanddurchführungen 90 und 91. Da die Durchlässe 61 und 62 bei Bedarf geschlossen werden können, können diese in dem Ausführungsbeispiel nach Figur 3 einen relativ großen Querschnitt bekommen. Dies hat den Vorteil, daß sich bei der zweiten Schaltstellung 70 der Vorsteuereinrichtung 67 in den Kammern 57 und 58 schnell der in den Druckbereichen 31 und 32 herrschende Druck aufbauen kann. Das ermöglicht eine schnelle Hin- und Herbewegung der beweglichen Trennwand 35 und die Kanäle 21 und 22 werden auch relativ schnell geschlossen, was bei Stellung der Vorsteuereinrichtung 67 in der zweiten Schaltstellung 70 zu guter Trennung der beiden Leitungsanschlüsse 6 und 10 führt. Es kann auch nur einer der beiden Durchlässe 61, 62 durch die Vorsteuereinrichtung 67 absperrbar und öffenbar sein.

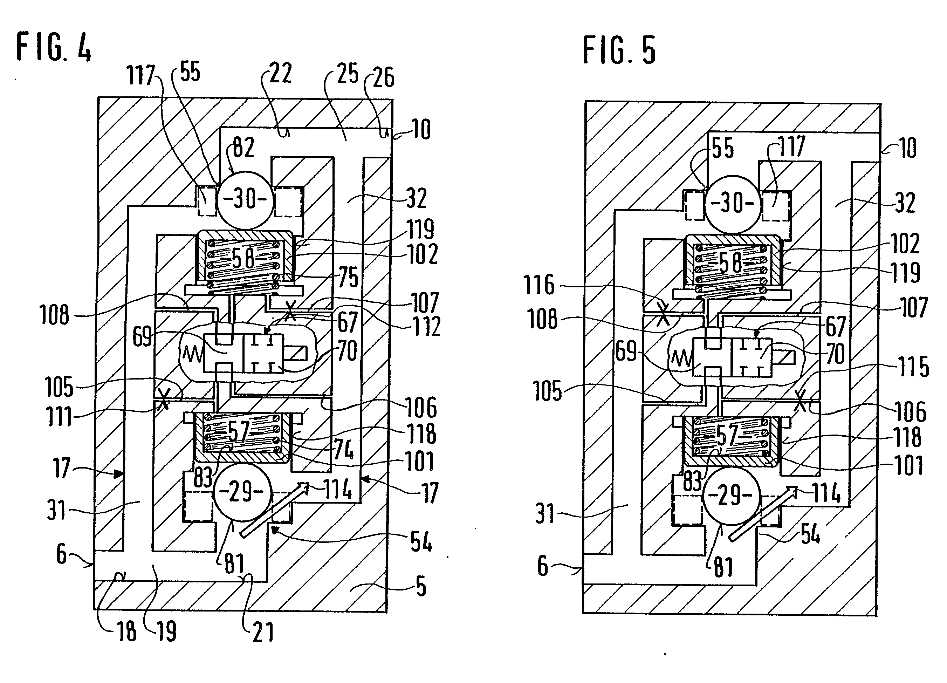

Das in der Figur 4 dargestellte dritte Ausführungsbeispiel hat die gleiche Funktionsweise und im Prinzip den gleichen Aufbau wie die in den vorhergehenden Figuren dargestellten und oben beschriebenen Ausführungsbeispiele. In dem in der Figur 4 dargestellten Ausführungsbeispiel sind anstatt nur einer Trennwand 35 (Figuren 1 bis 3) zwei bewegliche Trennwände 101 und 102 vorgesehen. Hat in den Figuren 1 bis 3 die bewegliche Trennwand 35 über die Kupplungen 33 und 34 ziehend auf die beiden Schließkörper 29 und 30 eingewirkt, so kann hier die bewegliche Trennwand 101 auf den Schließkörper 29 und die bewegliche Trennwand 102 auf den Schließkörper 30 unmittelbar drücken. In Figur 4 hat die auf der dem Schließkörper 29 abgewandten Seite der beweglichen Trennwand 101 vorgesehene Kammer 57 die gleiche Funktion wie die Kammer 57 in den Figuren 1 bis 3, weshalb diese Kammer 57 in allen Figuren mit demselben Bezugszeichen versehen ist. Auch die Kammer 58, die sich auf der dem Schließkörper 30 abgewandten Seite der beweglichen Trennwand 102 befindet, hat die gleiche Funktion wie die Kammer 58 in den Figuren 1 bis 3. Die erste Kammer 57 steht druckmäßig in Wirkverbindung mit dem ersten Druckbereich 31 über eine Leitung 105 und über eine Leitung 106 kann sie in Wirkverbindung mit dem zweiten Druckbereich 32 stehen. Die Kammer 58 steht über eine Leitung 107 in Wirkverbindung mit dem zweiten Druckbereich 32 und über eine Leitung 108 kann sie in Wirkverbindung mit dem ersten Druckbereich 31 stehen. Die Verbindung von der ersten Kammer 57 durch die Leitung 106 zum Druckbereich 32 und die Verbindung von der zweiten Kammer 58 durch die Leitung 108 zu dem Druckbereich 31 läßt sich durch die Vorsteuereinrichtung 67 absperren und freigeben. In der symbolisch dargestellten ersten Schaltstellung 69 der Vorsteuereinrichtung 67 sind die Leitungen 106 und 108 offen und in der Schaltstellung 70 sind sie geschlossen. Zweckmäßigerweise kann sich in der Leitung 105 eine Drossel 111 und in der Leitung 107 eine Drossel 112 befinden.

Ist die Vorsteuereinrichtung 67 in der symbolisch dargestellten ersten Schaltstellung 69, so arbeitet das Schaltventil 5 in folgender Weise: Ist der Druck am ersten Leitungsanschluß 6, d.h. im ersten Druckbereich 31 höher als im zweiten Druckbereich 32, so kann der erste Schließkörper 29 durch die Druckdifferenz zwischen den beiden Druckbereichen 31 und 32 von dem Ventilsitz 54 abgehoben werden, so bald die Druckdifferenz ausreicht, um den Schließkörper 29 entgegen der Federkraft der Feder 74 aufzudrücken. Das Druckmedium kann durch den ersten Kanal 21 vom Leitungsanschluß 6 zum Leitungsanschluß 10 strömen. Der Schließkörper 29 kann den Durchfluß freigeben, weil die Kammer 57 über die Vorsteuereinrichtung 67 und die Leitung 106 mit dem zweiten Druckbereich 32, in dem der niedrigere Druck herrscht, verbunden ist. Das Strömen des Druckmediums vom Leitungsanschluß 6 zum Leitungsanschluß 10 durch den Kanal 21, vorbei an dem Schließkörper 29, ist mit dem Pfeil 114 symbolisch dargestellt. Durch den zweiten Kanal 22 kann das Druckmedium jetzt nicht fließen, da der Schließkörper 30 zusätzlich zu der Feder 75 von der Druckdifferenz gegen den Ventilsitz 55 gedrückt wird. Ist der Druck im zweiten Druckbereich 32 höher als im ersten Druckbereich 31, so öffnet der Schließkörper 30 und das Druckmedium strömt in umgekehrter Richtung durch den Kanal 22 vom Leitungsanschluß 10 zum Leitungsanschluß 6. Dies ist so, weil die Kammer 58 über die Vorsteuereinrichtung 67 und die Leitung 108 mit dem ersten Druckbereich 31, in dem der nun niedrigerere Druck herrscht, verbunden ist. Durch die Drosseln 111 und 112 wird verhindert, wenn die Vorsteuereinrichtung 67 in der symbolisch dargestellten Schaltstellung 69 ist, daß dann der hohe Druck in den Kammern 57 und 58 wirken kann.

Ist die Vorsteuereinrichtung 67 in der symbolisch dargestellten zweiten Schaltstellung 70, dann arbeitet das Schaltventil 5 auf folgende Weise: Die Verbindung von der ersten Kammer 57 zu dem zweiten Druckbereich 32 und die Verbindung von der zweiten Kammer 58 zu dem ersten Druckbereich 31 ist verschlossen. In der ersten Kammer 57 herrscht nun der gleiche Druck wie im ersten Druckbereich 31 und in der Kammer 58 herrscht der gleiche Druck wie im zweiten Druckbereich 32. Ist der Druck am ersten Leitungsanschluß 6, d.h. im ersten Druckbereich 31 höher als am zweiten Leitungsanschluß 10, dann wird der zweite Schließkörper 30 gegen den Ventilsitz 55 gedrückt. Auf den Schließkörper 29 wirkt nun von der einen Seite auf die Wirkfläche 81 die Druckdifferenz in öffnender Richtung, ebenso wirkt die Druckdifferenz aber auch über die Wirkfläche 83 der beweglichen Trennwand 101 in der Kammer 57 auf den Schließkörper 29 in schließender Richtung. Da die Wirkfläche 83 größer ist als die Wirkfläche 81 ist die Kraft auf den Schließkörper 29 in schließender Richtung größer als die Kraft in öffnender Richtung. Somit wird auch der Schließkörper 29 gegen seinen Ventilsitz 54 gedrückt und auch durch den Kanal 21 kann kein Druckmedium vom Leitungsanschluß 6 zum Leitungsanschluß 10 fließen. Die Verbindung 17 zwischen den beiden Leitungsanschlüssen 6 und 10 ist gesperrt. Entsprechend verhält es sich, wenn der Druck am Leitungsanschluß 10 höher ist als am Leitungsanschluß 6. Auch dann ist die Verbindung 17 gesperrt.

Aufbau und Funktionsweise des in der Figur 5 dargestellten vierten Ausführungsbeispieles entspricht weitgehend dem in der Figur 4 dargestellten Ausführungsbeispiel, nur die Leitungsführung der Leitungen 105 bis 108 zwischen den Druckbereichen 31 und 32, den Kammern 57 und 58 und der Vorsteuereinrichtung 67 ist etwas anders ausgeführt. Bei der symbolisch dargestellten ersten Schaltstellung 69 der Vorsteuereinrichtung 67 steht die erste Kammer 57 in Wirkverbindung mit dem ersten Druckbereich 31 und die zweite Kammer 58 steht in Wirkverbindung mit dem zweiten Druckbereich 32. In der Leitung 106 zwischen der Kammer 57 und dem zweiten Druckbereich 32 befindet sich eine Drossel 115 und zwischen der zweiten Kammer 58 und dem ersten Druckbereich 31 befindet sich ebenfalls eine Drossel 116. Durch die Drossel 115 kann das durchströmende Druckmedium so weit angedrosselt werden, daß, wenn der Druck an dem ersten Leitungsanschluß 6 höher ist als an dem zweiten Leitungsanschluß 10, der Druck, welcher über die Leitung 105 und über die Vorsteuereinrichtung 67 auf die Wirkfläche 83 in der Kammer 57 auf die Trennwand 101 wirkt, diese daraus entstehende Kraft ausreicht, um den Schließkörper 29 entgegen der Kraft, die durch den Druck auf die Wirkfläche 81 wirkt, gegen den Ventilsitz 54 zu drücken. Ebenso verhält es sich mit der Drossel 116, die so bemessen sein muß, daß das durchströmende Druckmedium so weit angedrosselt wird, daß der Druck in der Kammer 58 den Schließkörper 30 gegen den Ventilsitz 55 drücken kann, wenn der Druck am Leitungsanschluß 10 höher ist als am ersten Leitungsanschluß 6.

In dem dritten und vierten Ausführungsbeispiel besteht je eine Leitung 105 und 106 zwischen der Kammer 57 und den beiden Druckbereichen 31 und 32. Hiervon ist entweder die Leitung 105 oder die Leitung 106 durch die Vorsteuereinrichtung 67 geführt und durch diese absperrbar und öffenbar. Es ist aber auch möglich, beide Leitungen 105 und 106 durch die Vorsteuereinrichtung 67 zu führen und die Vorsteuereinrichtung 67 so auszubilden, daß, während eine der beiden Leitungen 105 und 106 geschlossen ist, die jeweils andere Leitung geöffnet ist und umgekehrt. Dies ergibt, je nach Schaltstellung der Vorsteuereinrichtung 67, eine exakte Zuordnung der Kammer 57 entweder zu dem ersten Druckbereich 31 oder zu dem zweiten Druckbereich 32. In gleicher Weise sind auch die beiden Leitungen 107 und 108 durch die Vorsteuereinrichtung 67 geführt. Die Vorsteuereinrichtung 67 ist dann z.B. so auszuführen, daß in der ersten Schaltstellung 69 die Kammer 57 dem ersten Druckbereich 31 und die Kammer 58 dem zweiten Druckbereich 32 zugeordnet ist und so, daß in der zweiten Schaltstellung 70 die Kammer 57 dem zweiten Druckbereich 32 und die Kammer 58 dem ersten Druckbereich 31 zugeordnet ist. Das bewirkt, daß in der ersten Schaltstellung 69 der Vorsteuereinrichtung 67 die Verbindung 17 zwischen den Leitungsanschlüssen 6 und 10 gesperrt und in der zweiten Schaltstellung 70 die Verbindung geöffnet ist.

In den in den Figuren 1 bis 3 gezeigten Ausführungsbeispielen sind die Schließkörper 29 und 30 plattenförmig ausgebildet, und in den Beispielen nach den Figuren 4 und 5 sind die Schließkörper 29 und 30 kugelförmig. Die Form der Schließkörper ist nicht bindend, sondern nur beispielhaft. In den Figuren 4 und 5 werden die kugelförmigen Schließkörper 29 und 30 durch gestrichelt gezeichnete Führungen 117 gegen seitliches Ausweichen gesichert. Die Schließkörper 29 und 30 können auch, wie nicht dargestellt, mit den beweglichen Trennwänden 101 und 102 mechanisch verbunden sein oder aus einem Werkstück bestehen.

In den Figuren 4 und 5 sind die beweglichen Trennwände 101 und 102 zwei Kolben, die in je einer Bohrung 118 und 119 im Schaltventil 5 geführt werden und in den Figuren 1 bis 3 ist die bewegliche Trennwand 35 eine Membrane. Dies ist nicht bindend, sondern nur beispielhaft. Statt den Kolben für die Trennwände 101 und 102 in den Figuren 4 und 5 kann auch eine Membrane oder mehrere Membranen vorgesehen sein, und die Membrane 38 für die Trennwand 35 in den Figuren 1 bis 3 kann auch ein in einer Bohrung gleitender Kolben oder mehrere Kolben sein.

Soll die Verbindung 17 zwischen den beiden Leitungsanschlüssen 6 und 10 nur in einer Richtung absperrbar sein, dann genügt es, wenn nur einer der beiden Schließkörper 29, 30 durch eine bewegliche Trennwand 35, 101, 102 betätigbar ist.

## Ansprüche

1. Schaltventil für ein Fahrzeug-Federelement zum Zu- und Abschalten eines Zusatzvolumens zu einem Volumen des Federelements, dadurch gekennzeichnet, daß das Schaltventil (5) zwei Leitungsanschlüsse (6 und 10) hat, einen zum Anschließen des Federelementes (1) und einen zum Abschließen des Zusatzvolumens (11), daß ferner die Leitungsanschlüsse (6 und 10) über zwei Kanäle (21 und 22) miteinander verbunden sind und daß in jedem Kanal ein Schließkörper (29, 30) vorgesehen ist, von denen jeweils mindestens einer durch eine Vorsteuereinrichtung (67) betätigbar ist.

2. Schaltventil für ein Fahrzeug-Federelement nach Anspruch 1, dadurch gekennzeichnet, daß der betätigbare Schließkörper (29, 30) über eine druckmittelverstellbare Kupplung (33, 34) betätigbar ist.

3. Schaltventil für ein Fahrzeug-Federelement nach Anspruch 2, dadurch gekennzeichnet, daß der betätigbare Schließkörper (29, 30) über die Kupplung (33, 34) mit einer druckmittelbeaufschlagten, einen Raum in zwei Kammern (57 und 58) teilenden, beweglichen Trennwand (35) verbunden ist.

4. Schaltventil für ein Fahrzeug-Federelement nach Anspruch 3, dadurch gekennzeichnet, daß die eine Kammer (57) mit dem einen Leitungsanschluß (6) und die andere Kammer (58) mit dem anderen Leitungsanschluß (10) über je einen Durchlaß (61, 62) in Wirkverbindung steht.

5. Schaltventil für ein Fahrzeug-Federelement nach Anspruch 4, dadurch gekennzeichnet, daß in mindestens einem der beiden Durchlässe (61, 62) eine Drossel (88) vorgesehen ist.

6. Schaltventil für ein Fahrzeug-Federelement nach einem der Ansprüche 3 bis 5, dadurch gekennzeichnet, daß die beiden Kammern (57 und 58) über eine durch die Vorsteuereinrichtung (67) verschließ- und öffenbare Leitung (66) verbunden sind.

7. Schaltventil für ein Fahrzeug-Federelement nach einem der Ansprüche 4 bis 6, dadurch gekennzeichnet, daß mindestens einer der Durchlässe (61, 62) zum Überwachen des Durchflusses durch die Vorsteuereinrichtung (67) geführt ist.

8. Schaltventil für ein Fahrzeug-Federelement nach Anspruch 6 und 7, dadurch gekennzeichnet, daß die Vorsteuereinrichtung (67) so ausgeführt ist, daß bei offener Leitung (66) mindestens einer der Durchlässe (61, 62) geschlossen und bei geschlossener Leitung (66) die Durchlässe (61, 62) geöffnet sind.

9. Schaltventil für ein Fahrzeug-Federelement nach Anspruch 1, dadurch gekennzeichnet, daß einer der Schließkörper (29, 30) über eine bewegliche Trennwand (101, 102) betätigbar ist.

10. Schaltventil für ein Fahrzeug-Federelement nach Anspruch 9, dadurch gekennzeichnet, daß die Trennwand (101, 102) einen der Kanäle (21, 22) von einer Kammer (57, 58) abtrennt.

11. Schaltventil für ein Fahrzeug-Federelement nach Anspruch 1, dadurch gekennzeichnet, daß die Schließkörper (29, 30) über je eine bewegliche Trennwand (101, 102) betätigbar sind.

12. Schaltventil für ein Fahrzeug-Federelement nach Anspruch 11, dadurch gekennzeichnet, daß die beiden Trennwände (101, 102) je einen der Kanäle (21, 22) von je einer Kammer (57, 58) abtrennen.

13. Schaltventil für ein Fahrzeug-Federelement nach einem der Ansprüche 10 oder 12, dadurch gekennzeichnet, daß jede Kammer (57, 58) über mindestens eine Leitung (105, 108) mit dem ersten Leitungsanschluß (6) und über mindestens eine andere Leitung (106, 107) mit dem anderen Leitungsanschluß (10) in Wirkverbindung steht.

14. Schaltventil für ein Fahrzeug-Federelement nach Anspruch 13, dadurch gekennzeichnet, daß mindestens eine der Leitungen (105 bis 108) zum Überwachen des Durchflusses durch die Vorsteuereinrichtung (67) geführt ist.

15. Schaltventil für ein Fahrzeug-Federelement nach einem der Ansprüche 13 oder 14, dadurch gekennzeichnet, daß in mindestens eine der Leitungen (105 bis 108) eine Drossel (111, 112, 115, 116) eingesetzt ist.

16. Schaltventil für ein Fahrzeug-Federelement nach einem der Ansprüche 1 bis 15, dadurch gekennzeichnet, daß die Vorsteuereinrichtung (67) ein Magnetventil ist.

FIG. 1

FIG. 2

FIG.3

3.5.88 Go

FIG. 4

FIG. 5